# EUROPEAN PATENT APPLICATION

(11) **EP 4 764 827 A1**
(43) Date of publication of application: **24.06.2026**
(21) Application number: 25223729.2
(22) Date of filing: 16.12.2025
(51) Int. Cl.: G06F 8/41, G06F 11/3604

(54) **GENERATING CONTROL FLOW GRAPHS FOR PROGRAMS WRITTEN IN PROCEDURAL PROGRAMMING LANGUAGES**

(30) Priority: 17.12.2024 US 202418983935
(71) Applicant: CA, Inc., Palo Alto, CA 94304 (US)
(72) Inventor: Baranov, Leonid, 149 00 Prague (CZ); Shchekochikhin, Iurii, 180 00 Prague (CZ)
(74) Representative: Dilg, Haeusler, Schindelmann Patentanwaltsgesellschaft mbH

(57) **Abstract**

A computer is configured to generate a control flow graph (CFG) for a program written in a procedural programming language, by performing the steps of: converting original instructions from the program into modified instructions; generating a first runtime environment and executing a first set of the modified instructions in the first runtime environment; generating first state information based on the execution of the first set of modified instructions and storing the first state information in memory; generating a second runtime environment in response to a conditional instruction from the first set of modified instructions; retrieving the first state information from the memory and executing a second set of the modified instructions in the second runtime environment based on the first state information; identifying a plurality of control change instances of the program; and generating the CFG based on the control change instances and displaying the CFG on a display device.

## Description

### Background

A control flow graph (CFG) of a program is a data structure that provides a visual representation of how, as the program executes, a control of execution transitions between blocks of related instructions. Such blocks are also referred to herein as "organizational structures." For example, the program may be written in a procedural programming language, which is a type of programming language that is structured as a sequence of subroutines (also referred to as "procedures"), each subroutine containing one or more instructions to execute. Examples of procedural programming languages include C, common business-oriented language (COBOL), and formula translation (Fortran). For example, in the case of a COBOL program, a CFG may illustrate how control transitions between "sections," which are examples of organizational structures.

CFGs are useful for several reasons. For example, visualizing transitions of control may help programmers identify logical errors and bugs in programs. As another example, such visualizing may help programmers who are unfamiliar with programs to more easily follow and to learn the behavior of the programs. As another example, such visualizing may be useful for optimizations such as by showing that certain instructions are redundant or that certain instructions are unreachable. Instructions being unreachable means that they are never executed during a program's execution, regardless of any conditions or inputs to the program.

There are existing methods for generating CFGs, but such methods have several drawbacks. For example, static analysis may be performed, which is a process of examining a program's instructions without executing those instructions. In some situations, such analysis may allow for discovering the correct relationships between organizational structures. However, such analysis is often error-prone because it cannot be determined what the behavior of some instructions are without knowing any state information that would apply to such instructions. This sometimes leads to incorrect determinations of the relationships between organizational structures and incorrect identifications of unreachable instructions.

As another example, dynamic analysis may be performed, which is typically a process of executing a program's instructions and analyzing their behavior. When it comes to generating CFGs, typical dynamic analysis is often error-prone because it does not simulate every possible execution path. For example, if there is a conditional instruction that leads to two different execution paths, then based on an evaluation of an expression in the conditional instruction, typical dynamic analysis may only simulate one of such paths. As with static analysis, this sometimes leads to incorrect determinations of the relationships between organizational structures and incorrect identifications of unreachable instructions. There is thus a need for a more robust method for generating CFGs and identifying unreachable instructions of a program.

### Summary

One or more embodiments provide a computer including a processor and memory, wherein the processor executes instructions stored in the memory to generate a CFG for a program written in a procedural programming language. By executing such instructions, the computer performs the steps of: converting original instructions from the program into modified instructions; generating a first runtime environment and executing a first set of the modified instructions in the first runtime environment; generating first state information based on the execution of the first set of modified instructions and storing the first state information in the memory; generating a second runtime environment in response to a conditional instruction from the first set of modified instructions; retrieving the first state information from the memory and executing a second set of the modified instructions in the second runtime environment based at least on the first state information; identifying, based on the execution of the first and second sets of modified instructions, a plurality of control change instances in which control changes from one of a plurality of organizational structures of the program to another one of the organizational structures; and generating the CFG based on the control change instances and displaying the CFG on a display device. The displayed CFG illustrates the organizational structures and illustrates relationships between the organizational structures based on the control change instances.

Further embodiments include a method comprising the above steps and a non-transitory computer-readable storage medium comprising instructions that cause a computer to carry out the above steps.

### Brief Description of the Drawings

Figure 1 is a block diagram illustrating an example of a computer system in which embodiments may be implemented.
Figure 2A is a block diagram that illustrates an example of a COBOL program.
Figures 2B-2D are block diagrams that illustrate examples of segments of a syntax tree that may be generated based on different portions of the COBOL program.
Figure 2E is a block diagram that illustrates examples of modified instructions that may be generated by traversing the syntax tree.
Figure 2F is a block diagram that illustrates an example of executing the modified instructions in a plurality of runtime environments.
Figure 2G is a block diagram that illustrates an example of a list of executed instructions and a list of unreachable instructions.
Figure 3A is a block diagram that illustrates a first example of how context may be used by embodiments to determine relationships between organizational structures of a program.
Figure 3B is a block diagram that illustrates an example of a CFG based on the first example.
Figure 4A is a block diagram that illustrates a second example of how context may be used by embodiments to determine relationships between organizational structures of a program.
Figure 4B is a block diagram that illustrates an example of a CFG based on the second example.
Figure 5A is a block diagram that illustrates a third example of how context may be used by embodiments to determine relationships between organizational structures of a program.
Figure 5B is a block diagram that illustrates an example of a CFG based on the third example.
Figure 6 is a flow diagram of a method that may be performed by a computer to analyze instructions of a program in which there is a conditional instruction, according to some embodiments.
Figure 7 is a flow diagram of a method that may be performed by a computer to display a CFG and unreachable instructions on a display device, according to some embodiments.
Figure 8 is a flow diagram of a method that may be performed by a computer to determine when a runtime environment may be stopped, according to some embodiments.

### Detailed Description

Techniques are described for generating CFGs and identifying unreachable instructions of a program. The instructions (or "source code") of the program that may be executed to perform intended functionalities of the program, e.g., by compiling the instructions using a compiler and executing the resulting machine code on an operating system (OS), or by executing the instructions directly using an interpreter, are referred to herein as "original instructions." According to embodiments, the original instructions are converted to new instructions that are optimized for generating CFGs and identifying unreachable instructions. Such new instructions, referred to herein as "modified instructions," eliminate unnecessary processing such as storing values for variables, printing text to a console, and evaluating whether expressions in conditional instructions are true or false.

According to embodiments, the modified instructions are executed to identify relationships between organizational structures and to identify unreachable instructions. Embodiments are thus similar to typical dynamic analysis in the sense that instructions are executed. However, embodiments execute the modified instructions instead of executing the original instructions. Additionally, unlike typical dynamic analysis, the modified instructions of a single program are executed in one or more runtime environments. As used herein a "runtime environment" is a collection of software resources that are capable of executing program instructions. One example of a runtime environment is an instance of Java Virtual Machine (JVM), which enables the execution of Java instructions on a variety of different OSs. According to embodiments, runtime environments are used that include engines that are specifically configured to execute modified instructions for generating CFGs and identifying unreachable instructions.

Embodiments offer various advantages over static and typical dynamic analysis. Unlike static analysis, embodiments are able to determine the behavior of instructions that are reliant on state information. This is because as the runtime environments execute the modified instructions, the runtime environments generate various state information. For example, such state information may identify that modified instructions of particular types have been previously executed. There are thus several situations in which embodiments described herein accurately determine relationships between organizational structures, where static analysis would fail.

Additionally, unlike typical dynamic analysis, embodiments are able to follow all the possible execution paths of a program, even when there are divergent paths such as due to conditional instructions. For example, according to embodiments, when a conditional instruction is reached, instead of evaluating an expression and then following one path, a new runtime environment is generated. Different runtime environments then execute the different possible execution paths, allowing for accurately determining all the instructions that are reachable (and thus those that are unreachable). Furthermore, embodiments are more efficient than typical dynamic analysis because modified instructions are executed instead of original instructions. Such modified instructions may eliminate processing that is unnecessary for generating a CFG and determining unreachable instructions. These and further aspects of the invention are discussed below with respect to the drawings.

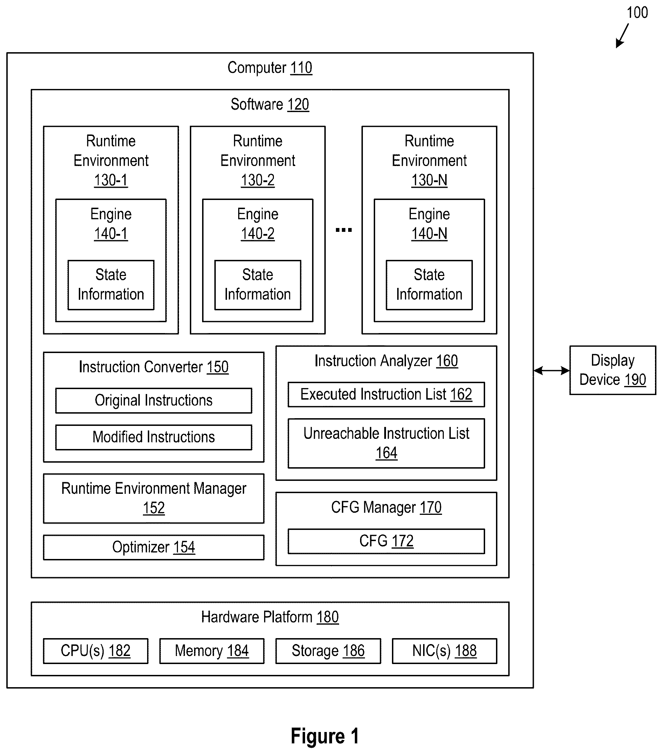

Figure 1 is a block diagram illustrating an example of a computer system 100 in which embodiments may be implemented. Computer system 100 includes a computer 110 and a display device 190 connected thereto. Although illustrated as separate from computer 110, display device 190 may be included by computer 110. For example, computer 110 may be a desktop computer or a server computer, and display device 190 may be a separate monitor connected thereto. As another example, computer 110 may be a laptop computer, tablet computer, or smartphone, and display device 190 may be a screen thereof.

Computer 110 is constructed on a hardware platform 180 such as an x86 architecture platform. Hardware platform 180 includes components of a computer, such as one or more central processing units (CPUs) 182, memory 184 such as random-access memory (RAM), local storage 186 such as one or more magnetic drives or solid-state drives (SSDs), and one or more network interface controllers (NICs) 188. CPU(s) 182 are configured to execute instructions such as executable instructions that perform one or more operations described herein, which may be stored in memory 184.

Hardware platform 180 supports software 120. Software 120 includes one or more runtime environments 130. Runtime environments 130 include engines 140 for executing modified instructions, which are generated based on original instructions of a program. Like typical interpreters, engines 140 may execute in a user space of computer 110 separately from an OS (not shown) on which runtime environments 130 execute. As engines 140 execute the modified instructions, engines 140 generate state information, which is stored, e.g., in memory 184.

For example, the state information may identify that modified instructions of particular types have been previously executed. As another example, the state information may identify that mappings have been created based on the previous execution of modified instructions. As another example, the state information may identify execution positions of runtime environments 130, e.g., positions of next modified instructions to execute. Such state information may be stored each time a modified instruction is executed. Such state information is sometimes referred to herein as "context," which is often used by embodiments for accurately analyzing instructions.

In the example of computer 110, software 120 also includes an instruction converter 150, a runtime manager 152, an optimizer 154, an instruction analyzer 160, and a CFG manager 170. Instruction converter 150 is a software component that is configured to convert original instructions of a program into the modified instructions that are executed by runtime environments 130. As discussed further below, such conversion may involve first generating a syntax tree based on the original instructions. The syntax tree is a data structure that breaks down elements of the original instructions and illustrates the hierarchical structure of the program. Then, instruction converter 150 may traverse the syntax tree to generate the modified instructions.

Runtime environment manager 152 is a software component that is configured to generate runtime environments 130. For example, at the beginning of analyzing a program, runtime environment manager 152 may generate runtime environment 130-1, and runtime environment 130-1 may begin executing modified instructions. Then, when runtime environment 130-1 encounters a conditional instruction, runtime environment manager 152 may generate runtime environment 130-2. Runtime environments 130-1 and 130-2 may then execute separate paths of the modified instructions, allowing for exploring both paths and eliminating the need for evaluating an expression in the original conditional instruction.

According to some embodiments, optimizer 154 is a software component that is configured to analyze the behavior of runtime environments 130 to determine when respective runtime environments 130 may be stopped. For example, if one of runtime environments 130 falls into an infinite loop, optimizer 154 may determine to stop that one of runtime environments 130 to avoid wasting time and processing resources.

Instruction analyzer 160 is a software component that is configured to identify unreachable instructions based on the execution of runtime environments 130. Instruction analyzer 160 stores, in an executed instruction list 162, instructions that are reachable. For example, the instructions in executed instruction list 162 may be modified instructions that have been executed by runtime environments 130, or they may be the original instructions corresponding thereto. When runtime environments 130 have finished executing modified instructions, instruction analyzer 160 generates an unreachable instruction list 162, for those instructions that are unreachable. For example, the instructions in unreachable instruction list 164 may be those modified instructions generated by instruction converter 150 that were not executed by any of runtime environments 130, or they may be the original instructions corresponding thereto. Unreachable instruction list 164 may be displayed on display device 190 for analysis of the program's behavior.

CFG manager 170 is a software component that is configured to generate a CFG 172 for a program. CFG 172 illustrates the organizational structures of the program and relationships between the organizational structures based on control change instances. As used herein, a "control change instance" is an occurrence in which runtime environments 130 transition from executing instructions in one organizational structure to executing instructions in another organizational structure. For example, in a COBOL program, there may be a control change instance in which one of runtime environments 130 transitions from executing COBOL instructions in a first section to executing COBOL instructions in a second section. CFG 172 may be displayed on display device 190 for analysis of the program's behavior.

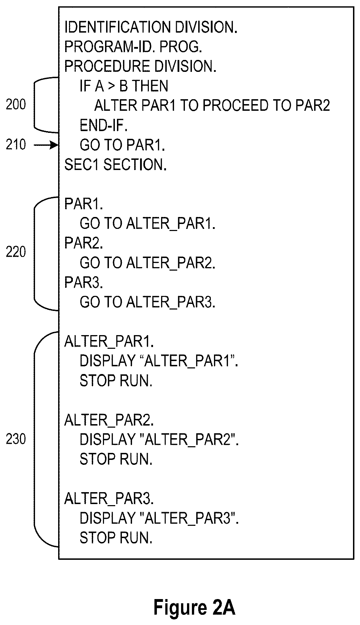

Figure 2A is a block diagram that illustrates an example of a COBOL program. The COBOL instructions illustrated in Figure 2A are original instructions. Lines 200 illustrate a conditional instruction, including the expression "A > B." If, based on the values of variables "A" and "B," such expression evaluates as true, lines 200 indicate to execute an alter instruction: "ALTER PAR1 TO PROCEED TO PAR2." Such alter instruction indicates to create a mapping for later substituting a paragraph "PAR1" with a paragraph "PAR2." Otherwise, if, based on the values of variables A and B, the expression evaluates as false, lines 200 indicate not to execute the alter instruction.

Line 210 is a go-to instruction that indicates to move control to PAR1. Lines 220 include three paragraphs "PAR1," "PAR2," and "PAR3," and include additional instructions to execute in those paragraphs. Each paragraph of lines 220 includes a go-to instruction, indicating to move control to a respective one of paragraphs "ALTER_PAR1," "ALTER_PAR2," and "ALTER_PAR3." Lines 230 include the three paragraphs ALTER_PAR1, ALTER_PAR2, and ALTER_PAR3, and include additional instructions to execute in those paragraphs. Each paragraph of lines 230 includes a display instruction, indicating to display a respective one of the text "ALTER_PAR1," "ALTER_PAR2," and "ALTER_PAR3," to a console (not shown) of software 120. Each paragraph of lines 230 also includes a "STOP RUN" instruction, indicating to terminate execution of the program.

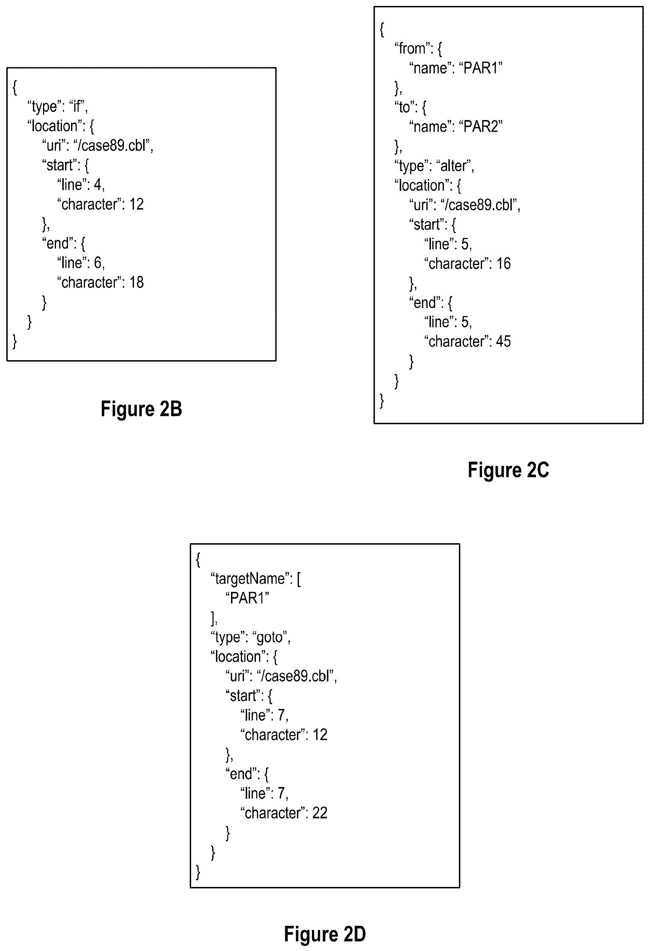

Figure 2B illustrates an example of a segment of a syntax tree that may be generated based on the conditional instruction of the COBOL program of Figure 2A. The example segment of Figure 2B includes various information about the conditional instruction, including that it starts on a line "4" of the program and that it ends on a line "6" of the program. It should be noted that the expression "A > B" is not stored in the example segment. This expression is unneeded because according to embodiments, runtime environments 130 do not need to evaluate such expression to generate a CFG and identify unreachable instructions.

Figure 2C illustrates an example of another segment of the syntax tree. The example segment of Figure 2C includes various information about the alter instruction. Such information includes that the alter instruction creates a mapping from PAR1 to PAR2, and that it starts and ends on a line "5" of the program.

Figure 2D illustrates an example of another segment of the syntax tree. The example segment of Figure 2D includes various information about the go-to instruction of line 210 of Figure 2A. Such information includes that the go-to instruction moves control to PAR1, and that it starts and ends on a line "7" of the program.

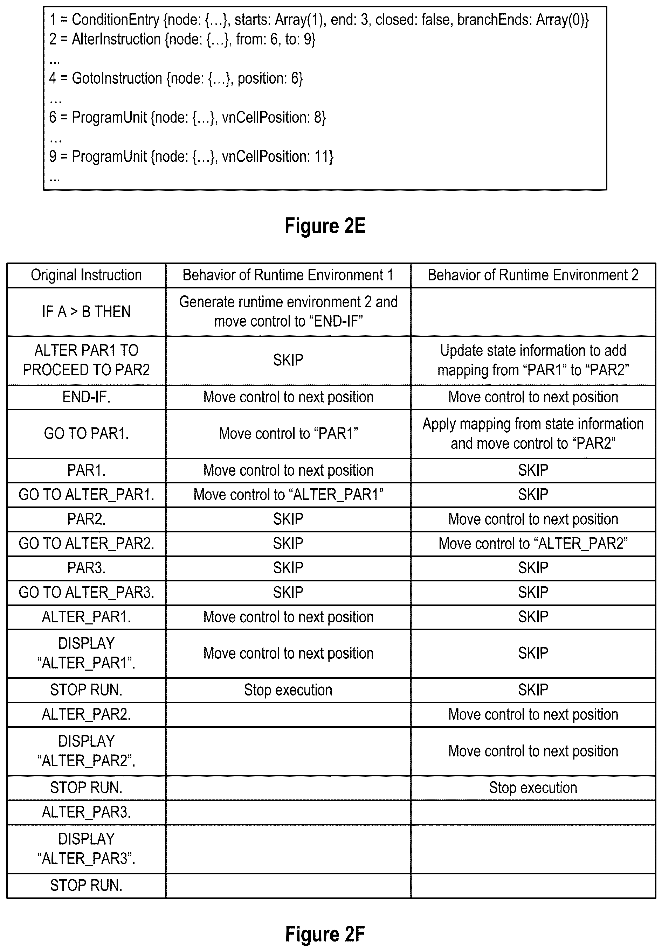

Figure 2E is a block diagram that illustrates examples of modified instructions that may be generated by traversing the syntax tree. For example, the modified instructions at lines "1," "2," and "4" of Figure 2E may be generated based on the segments of Figures 2B, 2C, and 2D, respectively. The other modified instructions of the program may be generated based on additional segments of the syntax tree generated based on the original instructions of Figure 2A.

It should be noted that the modified instruction at line 1, which corresponds to the original conditional instruction, does not require evaluating the expression "A > B." Additionally, the modified instruction at line 2, which corresponds to the original alter instruction, indicates to create a mapping from a line "6" of the modified instructions to a line "9" of the modified instructions. It should be noted that lines 6 and 9 of the modified instructions correspond to PAR1 and PAR2. Additionally, the modified instruction at line 4, which corresponds to the original go-to instruction of line 210 of Figure 2A, indicates to move control to line "6" of the modified instructions (corresponding to PAR1).

Figure 2F is a block diagram that illustrates an example of executing, in a plurality of runtime environments 230, modified instructions corresponding to the program of Figure 2A. The left-hand column indicates the original instructions, the middle column indicates the behavior of a first one of runtime environments 230, referred to herein as a "runtime environment 1," and the right-hand column indicates the behavior of a second one of runtime environments 230, referred to herein as a "runtime environment 2." For clarity, the behavior of runtime environments 1 and 2 will be discussed with respect to the original instructions. However, it should be understood that references to such behavior are actually based on execution of the modified instructions corresponding thereto.

First, runtime environment manager 152 generates runtime environment 1 to begin executing the modified instructions. Next, based on the conditional instruction "IF A > B THEN," runtime environment manager 152 generates runtime environment 2. Runtime environments 1 and 2 then execute different paths based on the conditional instruction. Specifically, runtime environment 1 executes the path in which the expression "A > B" is false, skips the alter instruction "ALTER PAR1 TO PROCEED TO PAR2," and moves control directly to the instruction "END-IF." Runtime environment 2 executes the path in which the expression "A > B" is true and begins execution at the alter instruction. Runtime environments 1 and 2 may then execute respective modified instructions in parallel.

Starting with runtime environment 1 at the instruction "END-IF", runtime environment 1 simply moves control to the next position. As used herein, moving to the next position simply means moving on to a next modified instruction. Modified instructions may exclude other processing required by corresponding original instructions when such other processing is not needed for generating a CFG and identifying unreachable instructions. In response to the instruction "GO TO PAR1," because runtime environment 1 did not create a mapping from PAR1 to PAR2, runtime environment 1 moves control to PAR1. Then, runtime environment 1 moves control to the next position.

In response to the instruction "GO TO ALTER_PAR1," runtime environment 1 skips each instruction until reaching "ALTER_PAR1." Then, runtime environment 1 repeatedly moves control to the next position until reaching the instruction "STOP RUN," at which point, runtime environment manager 152 stops runtime environment 1. It should be noted that runtime environment 1 does not actually display the text "ALTER_PAR1" because such processing is not needed for generating a CFG and identifying unreachable instructions.

Moving on to runtime environment 2, in response to the instruction "ALTER PAR1 TO PROCEED TO PAR2," runtime environment 2 updates state information therein to add a mapping from PAR1 to PAR2. Then, runtime environment 2 moves control to the next position. In response to the instruction "GO TO PAR1," runtime environment 2 retrieves the mapping from its state information, applies the mapping from its state information, skips PAR1, and moves control directly to PAR2. Then, runtime environment 2 moves control to the next position.

In response to the instruction "GO TO ALTER_PAR2," runtime environment 2 skips each instruction until reaching "ALTER_PAR2." Then, runtime environment 2 repeatedly moves control to the next position until reaching the instruction "STOP RUN," at which point, runtime environment manager 152 stops runtime environment 2. It should be noted that runtime environment 2 does not actually display the text "ALTER_PAR2" because such processing is not needed for generating a CFG and identifying unreachable instructions.

It should be noted that an OS or interpreter executing typical dynamic analysis would perform unnecessary processing that is eliminated by embodiments. For example, if the OS or interpreter executes the path of runtime environment 1, the OS or interpreter loads the values of the variables A and B from memory, evaluates the expression "A > B," and displays the text "ALTER_PAR1" to the console. However, such functionality is not needed for generating a CFG or for identifying unreachable instructions.

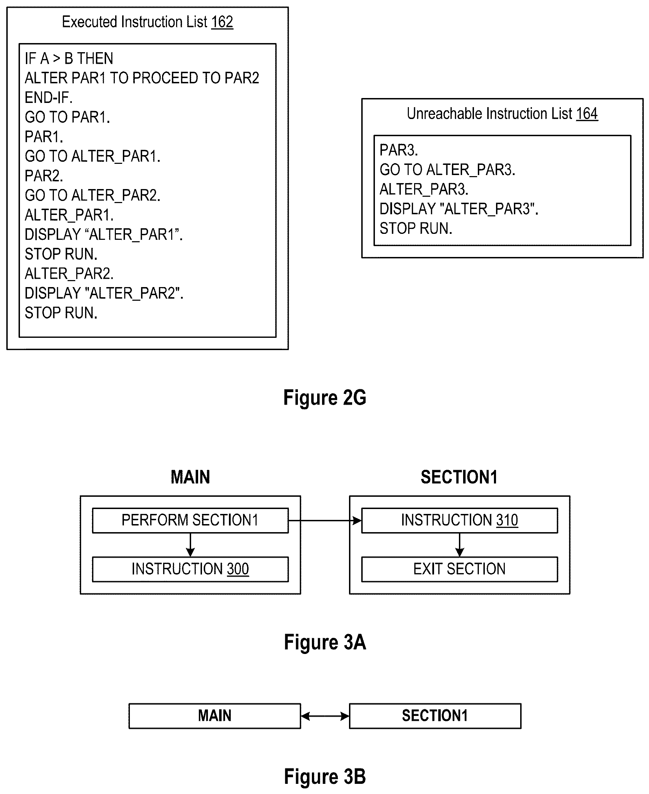

Figure 2G is a block diagram that illustrates an example of executed instruction list 162 and unreachable instruction list 164, based on the execution of Figure 2F. In the example of Figure 2G, instruction analyzer 160 stores original instructions in executed instruction list 162 and unreachable instruction list 164. Specifically, executed instruction list 162 includes original instructions corresponding to the modified instructions that were executed by at least one of runtime environments 1 and 2. Unreachable instruction list 164 includes original instructions corresponding to modified instructions that were not executed by either of runtime environments 1 and 2. Such instructions are deemed to be unreachable because runtime environments 1 and 2 simulated every possible execution path of the program and still did not execute the corresponding modified instructions.

It should be noted that instructional analyzer 160 may alternatively store modified instructions in executed instruction list 162 and unreachable instruction list 164. In such case, instruction analyzer 160 may store, in executed instruction list 162, each modified instruction that was executed by at least one of runtime environments 1 and 2. Instruction analyzer 160 may then store, in unreachable instruction list 164, each modified instruction that was not executed by either of runtime environments 1 and 2.

Figure 3A is a block diagram that illustrates a first example of how context may be used by embodiments to determine relationships between organizational structures of a program. The first example illustrates a COBOL program with two sections: a section "MAIN" and a section "SECTION1," which are analyzed by one of runtime environments 130, which will be referred to generically as "runtime environment 130." It should be noted that although original instructions may be referenced with respect to the first example for clarity, the behavior of runtime environment 130 is actually based on execution of modified instructions corresponding thereto, which are generated by instruction converter 150.

Runtime environment 130 begins with the instruction "PERFORM SECTION1" in MAIN. In response to this perform instruction, runtime environment 130 moves control to SECTION1. Additionally, a perform instruction is a type of instruction that may impact the execution of later instructions, as discussed further below. Accordingly, runtime environment 130 also updates its state information to identify the execution of the perform instruction.

Then, in response to some generic COBOL instruction "INSTRUCTION 310," runtime environment 130 moves control to the next position and reaches the instruction "EXIT SECTION." How the program should proceed in response to this exit section instruction depends on the context of how this exit section instruction was reached. If this exit section instruction is in a "scope" of a previous perform instruction, then the program should proceed to an instruction immediately after said perform instruction. Because static analysis does not execute any instructions or keep track of such context, static analysis would not be able to determine how the program should proceed after this exit section instruction.

However, embodiments keep track of state information as modified instructions are executed. Accordingly, when runtime environment 130 reaches the exit section instruction of SECTION1, runtime environment 130 may check the state information to determine that it reached the exit section instruction after executing the modified instruction for "PERFORM SECTION1." Runtime environment 130 thus determines that the exit section instruction is in the scope of the perform instruction. Accordingly, runtime environment 130 moves control back to the perform instruction. Runtime environment 130 then reaches the instruction immediately after the perform instruction, which is "INSTRUCTION 300" in MAIN.

Figure 3B is a block diagram that illustrates an example of CFG 172 based on the first example. Figure 3B illustrates both sections MAIN and SECTION1 of the first example as two organizational structures of the program. Furthermore, Figure 3B includes a bidirectional arrow therebetween, indicating that control moves both from MAIN to SECTION1 and from SECTION1 to MAIN. It should be noted that static analysis would not be able to accurately determine that control moves from SECTION1 to MAIN because static analysis would not know how control should proceed after the exit section instruction of SECTION1.

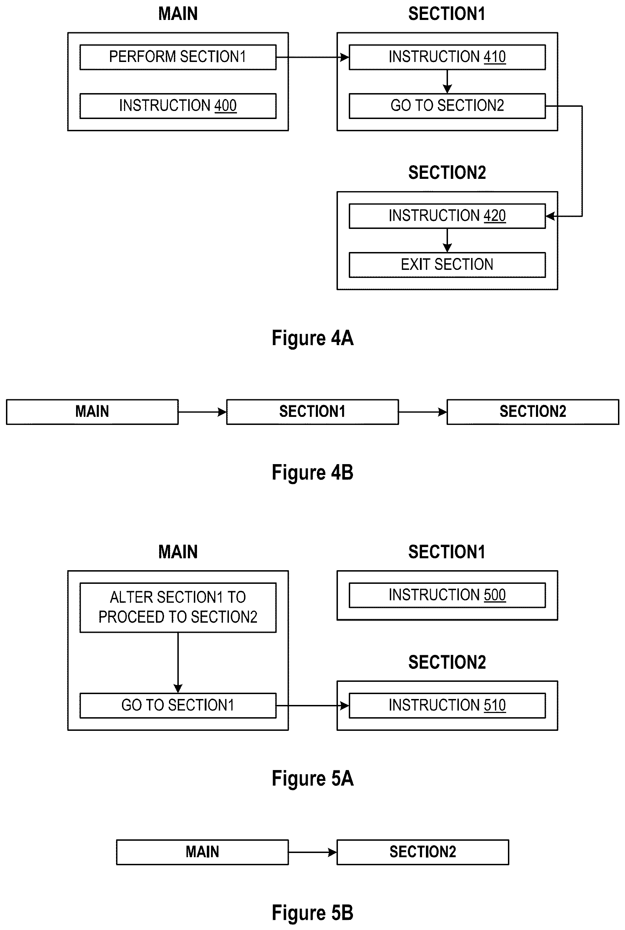

Figure 4A is a block diagram that illustrates a second example of how context may be used by embodiments to determine relationships between organizational structures of a program. The second example illustrates a COBOL program with three sections: different versions of the sections MAIN and SECTION1, and a section "SECTION2," which are analyzed by runtime environment 130. As with the first example, although original instructions may be referenced, the behavior of runtime environment 130 is actually based on execution of modified instructions corresponding thereto, which are generated by instruction converter 150. Runtime environment 130 begins with the instruction "PERFORM SECTION1" in MAIN. In response to this perform instruction, runtime environment 130 moves control to SECTION1.

Additionally, because of the type of instruction being a perform instruction, runtime environment 130 updates its state information to identify the execution of the perform instruction. Then, in response to some generic COBOL instruction "INSTRUCTION 410," runtime environment 130 moves control to the next position and reaches the instruction "GO TO SECTION2." In response to this go-to instruction, runtime environment 130 moves control to SECTION2. Additionally, because the go-to instruction identifies SECTION2, it takes runtime environment 130 outside the scope of the previous perform instruction, which had identified SECTION1. Accordingly, runtime environment 130 may update its state information to remove the execution of "PERFORM SECTION1," which indicates that runtime environment 130 is no longer within the scope of the perform instruction. Alternatively, for example, runtime environment 130 may update its state information to identify the execution of "GO TO SECTION2," which also indicates no longer being within the scope of the perform instruction.

Then, in response to some generic COBOL instruction "INSTRUCTION 420," runtime environment 130 moves control to the next position and reaches the instruction "EXIT SECTION." As with the first example, how the program should proceed in response to this exit section instruction depends on the context of how this exit section instruction was reached. Because static analysis does not keep track of such context, static analysis would not be able to determine how the program should proceed. However, embodiments keep track of state information as modified instructions are executed

Accordingly, when runtime environment 130 reaches the exit section instruction of SECTION2, runtime environment 130 may check the state information to determine that it reached the exit section instruction outside the scope of any perform instructions. Accordingly, runtime environment 130 does not move control back to the perform instruction and instead moves control elsewhere (or the program ends if there are no further instructions). It should thus be noted that runtime environment 130 never reaches "INSTRUCTION 400."

Figure 4B is a block diagram that illustrates an example of CFG 172 based on the second example. Figure 4B illustrates all three sections MAIN, SECTION1, and SECTION2 of the second example as three organizational structures of the program. Furthermore, Figure 4B includes an arrow from MAIN to SECTION1 and an arrow from SECTION1 to SECTION2, indicating that control moves both from MAIN to SECTION1 and from SECTION1 to SECTION2. It should be noted that static analysis would fail to accurately determine that control does not move from SECTION2 back to MAIN because static analysis would not know how control should proceed after the exit section instruction of SECTION2.

Figure 5A is a block diagram that illustrates a third example of how context may be used by embodiments to determine relationships between organizational structures of a program. The third example illustrates a COBOL program with three sections: different versions of the sections MAIN, SECTION1, and SECTION2, which are analyzed by runtime environment 130. As with the previous examples, although original instructions may be referenced, the behavior of runtime environment 130 is actually based on execution of modified instructions corresponding thereto, which are generated by instruction converter 150. Runtime environment 130 begins with the instruction "ALTER SECTION1 TO PROCEED TO SECTION2" in MAIN. In response to this alter instruction, runtime environment 130 creates a mapping for later substituting SECTION1 with SECTION2 and stores the mapping in its state information.

Runtime environment 130 then reaches the instruction "GO TO SECTION1." In response to this go-to instruction, runtime environment 130 first retrieves the mapping from its state information to determine to substitute SECTION1 with SECTION2. Then, based on such substitution, runtime environment 130 moves control to SECTION2 and reaches some generic COBOL instruction "INSTRUCTION 510." It should thus be noted that runtime environment 130 never reaches SECTION1 (or the instruction "INSTRUCTION 500" therein). Additionally, because static analysis does not execute any instructions or keep track of context such as mappings, static analysis would not have been able to determine how the program should proceed after the go-to instruction of MAIN, i.e., whether control should have moved to SECTION1 or moved to SECTION2.

Figure 5B is a block diagram that illustrates an example of CFG 172 based on the third example. Figure 5B illustrates the sections MAIN and SECTION2 of the third example as two organizational structures of the program, indicating that SECTION1 (and any instructions therein) are unreachable. Furthermore, Figure 5B includes an arrow from MAIN to SECTION2, indicating that control moves from MAIN to SECTION2. It should be noted that static analysis would not be able to accurately determine that control does not move from MAIN to SECTION1 because static analysis would not know how control should proceed after the go-to instruction of MAIN.

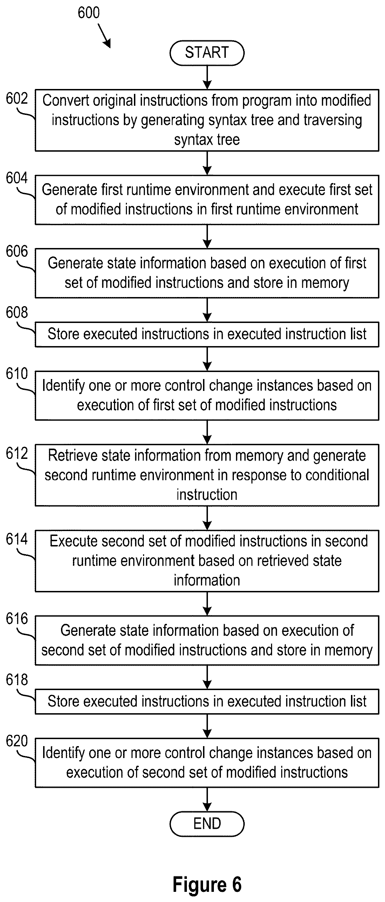

Figure 6 is a flow diagram of a method 600 that may be performed by computer 110 to analyze instructions of a program in which there is a conditional instruction, according to some embodiments. At step 602, instruction converter 150 converts original instructions from the program into modified instructions. There are various methods contemplated for how to carry out such conversion and what information to include in the modified instructions. As just one example, instruction converter 150 may first generate a syntax tree based on the original instructions, as discussed above in conjunction with Figures 2B-2D. Instruction converter 150 may then traverse the syntax tree to generate modified instructions, as discussed above in conjunction with Figure 2E. As discussed above, the modified instructions may exclude information from the original instructions such as expressions in conditional instructions.

At step 604, runtime environment manager 152 generates one of runtime environments 130, referred to as a "first runtime environment" with respect to method 600. Computer 110 then executes a first set of the modified instructions in the first runtime environment. At step 606, the first runtime environment generates state information based on the execution of the first set of modified instructions, including, e.g., executed modified instructions of particular types, mappings, and execution positions. The first runtime environment stores such state information, e.g., in memory 184. It should be noted that the first runtime environment may store such state information after each executed instruction, e.g., executed modified instructions of particular types, mappings, and an execution position after a first modified instruction, executed modified instructions of particular types, mappings, and an execution position after a second modified instruction, etc.

At step 608, instruction analyzer 160 stores the executed instructions from the first runtime environment in executed instruction list 162. At step 610, CFG manager 170 identifies one or more control change instances based on the execution of the first set of modified instructions. At step 612, in response to the first runtime environment reaching a conditional instruction in the first set of modified instructions, runtime environment manager 152 retrieves state information of the first runtime environment, e.g., from memory 184. Runtime environment manager 152 then generates another one of runtime environments 130, referred to as a "second runtime environment" with respect to method 600. The second runtime environment includes the state information of the first runtime environment at the point at which the first runtime environment encountered the conditional instruction.

At step 614, computer 110 executes a second set of the modified instructions in the second runtime environment based on the retrieved state information. At step 616, the second runtime environment generates state information based on the execution of the second set of modified instructions, including, e.g., executed modified instructions of particular types, mappings, and execution positions. The second runtime environment stores such state information, e.g., in memory 184. It should be noted that the second runtime environment may store such state information after each executed instruction, e.g., executed modified instructions of particular types, mappings, and an execution position after a first modified instruction, executed modified instructions of particular types, mappings, and an execution position after a second modified instruction, etc. At step 618, instruction analyzer 160 stores the executed instructions from the second runtime environment in executed instruction list 162. At step 620, CFG manager 170 identifies one or more control change instances based on the execution of the second set of modified instructions. After step 620, method 600 ends.

It should be noted that Figure 6 illustrates just one example of analyzing instructions of a program. For example, there may be no conditional instructions in the program, in which case the first runtime environment may execute all the modified instructions, and steps 612-620 are not needed. As another example, there may be many conditional instructions in the program, in which case, runtime environment manager 152 may generate several runtime environments for simulating each possible execution path of the program. Accordingly, steps 612-620 may be executed several times by several of runtime environments 130. In other words, the number of runtime environments 130 is not limited to two.

Additionally, it should be noted that although Figure 6 merely illustrates executing the second set of modified instructions based on state information from the first set of modified instructions, embodiments are not limited as such. State information generated based on executing one of the first set of modified instructions in the first runtime environment may later be used for executing another one of the first set of modified instructions in the first runtime environment. Similarly, state information generated based on executing one of the second set of modified instructions in the second runtime environment may later be used for executing another one of the second set of modified instructions in the second runtime environment. For example, in the case of a COBOL program, either runtime environment may identify an exit section instruction and determine based on its respective state information that it was reached within the scope of a perform instruction, as discussed above in conjunction with Figure 3A. According to such example, either runtime environment may thus determine to move control back to the perform instruction and then execute one of its respective modified instructions that is located directly after such perform instruction in the program.

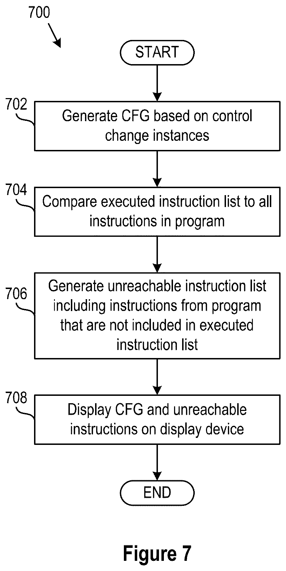

Figure 7 is a flow diagram of a method 700 that may be performed by computer 110 to display CFG 172 and unreachable instructions on display device 190, according to some embodiments. Steps of method 700 may be performed in parallel with steps of method 600 or may be performed after the steps of method 600. At step 702, CFG manager 170 generates CFG 172 based on control change instances. Such control change instances occur as one or more of runtime environments 130 execute modified instructions. Each time one of such control change instances occurs, CFG manager 170 may update CFG 172 accordingly, e.g., by adding an organizational structure or by adding an arrow between organizational structures.

At step 704, CFG manager 170 compares executed instruction list 162 to a list of all the instructions of the program. Such comparison may be based on modified instructions or original instructions. At step 706, CFG manager 170 generates unreachable instruction list 164 based on the comparison, to include all the instructions (modified or original) from the program that are not included in executed instruction list 162. At step 708, computer 110 displays, on display device 190, CFG 172 and the unreachable instructions of the program indicated by unreachable instruction list 164. The displayed unreachable instructions may include the unreachable modified instructions, the original instructions corresponding thereto, or both. After step 708, method 700 ends. CFG 172 and the unreachable instructions may then be reviewed, e.g., by a programmer to identify logical errors and bugs in the program, to more easily follow and learn the behavior of the program, or to learn that certain instructions are redundant or unreachable.

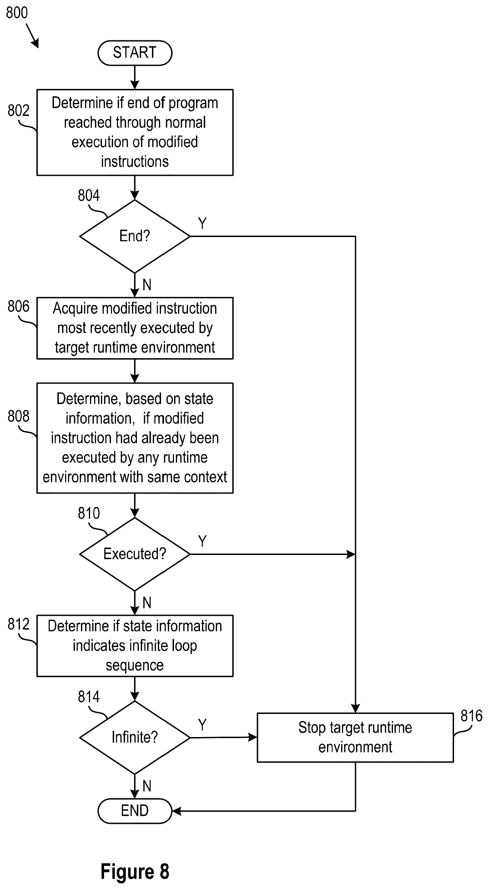

Figure 8 is a flow diagram of a method 800 that may be performed by computer 110 to determine when one of runtime environments 130 may be stopped, according to some embodiments. Steps of method 800 may be performed in parallel with steps of method 600, e.g., to save time and reduce the consumption of processing resources. For example, method 800 may be performed each time a modified instruction is executed by one of runtime environments 130, referred to as a "target runtime environment" with respect to Figure 8. At step 802, the target runtime environment determines if it has reached the end of a program through normal execution of modified instructions.

For example, in the case of a COBOL program, if a modified instruction most recently executed corresponds to a "STOP RUN" instruction, then the target runtime environment determines that it has reached the end of the program through normal execution. Otherwise, the target runtime environment may determine that it has not reached the end of the program through normal execution. At step 804, if the target runtime environment determines that it has reached the end of the program through normal execution, method 800 moves to step 816. Otherwise, method 800 moves to step 806. At step 806, optimizer 154 acquires the most recently executed modified instruction, e.g., by retrieving the state information of the target runtime environment from memory 184 and checking the execution position thereof.

At step 808, optimizer 154 determines if the modified instruction had already been executed by any of runtime environments 130 with the same context. Optimizer 154 may determine this, e.g., by retrieving the state information of all of runtime environments 130. Optimizer 154 may first check the execution positions from all the state information to determine if any of runtime environments 130 had already executed the modified instruction at all. If any had already executed the modified instruction (i.e., it is a common modified instruction), optimizer 154 may further check the state information of the ones of runtime environments 130 that had executed the common modified instruction. Doing so, optimizer 154 may determine if the context was the same each time the common modified instruction was executed.

As mentioned earlier, each time one of runtime environments 130 executes a modified instruction, its state information at that time may be stored in memory 184. Accordingly, for example, optimizer 154 may check the context when the target runtime environment most recently executed the modified instruction and the context when any of runtime environments 130 previous executed it. If the state information (e.g., the mappings) are the same, optimizer 154 may determine that the context was the same in both situations. Otherwise, if the state information (e.g., the mappings) are different, optimizer 154 may determine that the context was different.

At step 810, if optimizer 154 determines that the modified instruction had already been executed with the same context, method 800 moves to step 816. Otherwise, if optimizer 154 determines that the modified instruction had not already been executed with the same context, method 800 moves to step 812. At step 812, optimizer 154 determines if the state information for the target runtime environment indicates that the target runtime environment reached the modified instruction in an infinite loop sequence. For example, the state information may indicate that the target runtime environment has repeatedly executed the same perform instruction, which indicates that the target runtime environment is in an infinite loop sequence.

At step 814, if the state information does not indicate an infinite loop sequence, method 800 ends. Otherwise, if the state information indicates an infinite loop sequence, method 800 moves to step 816. At step 816, runtime environment manager 152 stops the target runtime environment (terminates its execution). For example, if step 816 is reached from step 804, the end of the program is reached.

As another example, if step 816 is reached from step 810, the execution path of the target runtime environment is repeating or has merged with another of runtime environments 130, so continuing the target runtime environment may result in redundant execution. Otherwise, if step 816 is reached from step 814, the target runtime environment is in an infinite loop sequence, also resulting in redundant execution. After step 816, method 800 ends. Once all of runtime environments 130 for a program have been stopped, CFG 172 may be generated and displayed, and unreachable instructions may be determined and displayed, as discussed above in conjunction with Figure 7.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A method of generating a control flow graph, CFG, for a program written in a procedural programming language, the method comprising:
converting original instructions from the program into modified instructions;
generating a first runtime environment and executing a first set of the modified instructions in the first runtime environment;
generating first state information based on the execution of the first set of modified instructions and storing the first state information in the memory;
generating a second runtime environment in response to a conditional instruction from the first set of modified instructions;
retrieving the first state information from the memory and executing a second set of the modified instructions in the second runtime environment based at least on the first state information;
identifying, based on the execution of the first and second sets of modified instructions, a plurality of control change instances in which control changes from one of a plurality of organizational structures of the program to another one of the organizational structures; and
generating the CFG based on the control change instances and displaying the CFG on a display device, the displayed CFG illustrating the organizational structures and illustrating relationships between the organizational structures based on the control change instances.

2. The method as set forth in the preceding claim, further comprising:
executing the first set of modified instructions by using a first engine in the first runtime environment, the first engine executing in a user space of the computer separately from an operating system, OS, of the computer on which the first and second runtime environments execute; and
executing the second set of modified instructions by using a second engine in the second runtime environment, the second engine executing in the user space.

3. The method as set forth in any one of the preceding claims, wherein the conditional instruction includes an expression to evaluate, and the method further comprises:
excluding the expression from the first set of modified instructions; and
determining to generate the second runtime environment without evaluating the expression.

4. The method as set forth in any one of the preceding claims, further comprising:
recording, in a list, the first and second sets of modified instructions, or original instructions corresponding to the first and second sets of modified instructions;
determining, based on the list, a set of original instructions from the program for which corresponding modified instructions were not executed by the first runtime environment and were not executed by the second runtime environment; and
displaying the set of original instructions on the display device as being unreachable.

5. The method as set forth in any one of the preceding claims, wherein the procedural programming language is the common business-oriented language, COBOL, and the method further comprises:
identifying, when executing the first set of modified instructions in the first runtime environment, an exit section instruction in a current section of the program;
determining, based on the first state information, that a perform instruction from the first set of modified instructions was executed in the first runtime environment, the perform instruction identifying the current section; and
determining, in response to the exit section instruction and based on the perform instruction being executed, to execute a modified instruction from the first set of modified instructions that is located directly after the perform instruction in the program.

6. The method as set forth in any one of the preceding claims, further comprising:
generating second state information based on the execution of a subset of the second set of modified instructions in the second runtime environment, and storing the second state information in the memory; and
executing at least one of the second set of modified instructions in the second runtime environment based on the second state information.

7. The method as set forth in any one of the preceding claims, further comprising:
determining that the first set of modified instructions and the second set of modified instructions both include a common modified instruction;
determining that a state of the first runtime environment when executing the common modified instruction, matches a state of the second runtime environment when executing the common modified instruction; and
stopping the execution of the second runtime environment based on the match.

8. The method as set forth in any one of the preceding claims, further comprising:
determining, based on a state of the second runtime environment, that the second runtime environment reaches an infinite loop sequence of executing modified instructions of the second set of modified instructions; and
stopping the execution of the second runtime environment based on the infinite loop sequence.

9. A computer including a processor and memory, wherein the processor executes instructions stored in the memory to generate a control flow graph by controlling and/or carrying out a method as set forth in any one of the preceding method claims.

10. A non-transitory, computer-readable medium comprising instructions that are executable in a computer, wherein the instructions when executed cause the computer to carry out a method as set forth in any one of the preceding method claims.
